# EUROPEAN PATENT APPLICATION

(11) **EP 4 759 596 A2**
(43) Date of publication of application: **17.06.2026**
(21) Application number: 26175246.3
(22) Date of filing: 29.11.2023
(51) Int. Cl.: B60K 15/07

(54) **A STORAGE SYSTEM FOR A GASEOUS FUEL**

(30) Priority: 01.12.2022 GB 202218111; 12.10.2023 GB 202315648
(62) Divisional of application: 23820983.7
(71) Applicant: J.C. Bamford Excavators Limited, Uttoxeter Staffordshire ST14 5JP (GB)
(72) Inventor: FREETHY, Thomas, Uttoxeter, ST14 5JP (GB); SPROSTON, Joseph, Uttoxeter, ST14 5JP (GB); MCKEE, Michael, Uttoxeter, ST14 5JP (GB); STAUNTON, Thomas, Uttoxeter, ST14 5JP (GB)
(74) Representative: Sugden, Mark William

(57) **Abstract**

Disclosed herein is a working machine comprising: a ground engaging structure for providing propulsion over a ground surface; a chassis mounted to the ground engaging structure; an operator cab mounted to the chassis; a gas engine for providing propulsive power to the ground engaging structure; at least one storage tank for storing gaseous fuel for the gas engine; and, a purge valve for removing gaseous fuel from the at least one storage tank.

## Description

### FIELD

The present invention relates to a gas storage system, a working machine, in particular, though not exclusively, a backhoe loader including the gas storage system, and to a method of commissioning a gas storage system.

### BACKGROUND

Off-highway vehicles/working machines are typically those used in construction industries (e.g. backhoe loaders, slew excavators, telescopic handlers, forklifts, skid-steer loaders, dump trucks, bulldozers, graders), agricultural industries (e.g. tractors, combine harvesters, wheeled loading shovels, telescopic handlers, self-propelled harvesters and sprayers), quarrying (e.g. excavators, wheeled loading shovels, aggregate crushing equipment), and forestry (e.g. timber harvesters, feller bunchers). Many working machines have a primary function of moving material using either a lifting arm (e.g. a pivoting boom) or a working arm (e.g. an excavator arm) and may be referred to as material handling machines.

Conventionally, working machines of the type referred to above are generally powered by diesel internal combustion engines. However, there is a general need to reduce vehicle emissions in the face of global warming leading to working machine OEMs considering alternative prime movers. Proposed alternatives include battery, hydrogen fuel cells, hydrogen internal combustion engines and various hybrid options, etc.

The present invention seeks to provide an improved working machine or gas storage system.

### SUMMARY

The present invention provides a working machine according to the appended claims.

In a first aspect, the present invention provides a working machine comprising: a ground engaging structure and a chassis mounted to the ground engaging structure. The working machine may comprise an operator cab mounted to the chassis.

The working machine may comprise a gas engine for providing motive power to the ground engaging structure; and at least one storage tank for storing gaseous fuel for the gas engine.

The at least one storage tank may be provided on a roof of the operator cab.

Providing the storage tank on the roof of the operator cab may be considered counterintuitive in many regards, particularly for a gas engine run of exclusively one fuel type. In conventional working machines powered by diesel engines, there is a requirement for a diesel storage tank. Hence, it may be considered to be an obvious modification to replace the diesel tank with one or more gas storage tanks. This would make the conversion of a conventional diesel machine to an equivalent hydrogen machine more straightforward and may prevent having to reinvent the storage requirements. However, placing the storage tanks on the roof may be considered beneficial for numerous reasons.

For example, placing the tanks on the roof helps protect them from damage in the event of an impact when travelling on road, particularly where working machine is a backhoe loader with a relatively high cab. Also, in the event of a leak, the venting of escaped gas can be more straightforward if the tanks are provided on an upper part of the machine, at least for gases which are lighter than air, e.g. hydrogen. A further advantage is that, in the event of a vehicle fire, for example in the engine bay or one of the electrical systems in the chassis, providing the tanks higher up gives additional time for the fire to be detected before the tanks are directly heated. Further still, providing the tanks on the cab roof may help isolate the gas from electrical systems that may provide a source of ignition. Providing the storage system above the operator cab helps reduce potential operator exposure in the event of a leak, particularly for gaseous fuels lighter than air, e.g. hydrogen.

The at least one storage tank may comprise an elongate cylinder having a longitudinal axis. The at least one storage tank may comprise an elongate cylinder having rounded, e.g. hemispherical end caps.

The longitudinal axis may be aligned with a principal axis of the working machine. Aligning the at least one storage tank with the longitudinal axis of the machine may be preferable from a stress loading point of view. That is, it may be easier to react longitudinal loads during accelerations and decelerations (as opposed to a transverse orientation which would result in potential rotation and shear or hoop stresses on the tank). This may be particularly so for machines having a front shovel which are continually manoeuvred into the material to be shovelled or the like. Further, the size to the tanks may be larger when aligned longitudinally as they can more readily overhang the front or rear of the machine.

The roof may comprise a mounting frame to which the at least one storage tank may be mounted. The mounting frame may be attached to the tanks and structural framework of the cab to help transfer the load into the cab and chassis. Where the at least one storage tank comprises an elongate cylinder, there may be provided a neck portion at either end of the tank. The at least one storage tank may be attached to the frame via the neck portion. Providing neck mounting allows the at least one storage tank to sit vertically within the mounting frame and closer to the roof of the operator cab. In some embodiments of the present disclosure, the at least one storage tank may be strap mounted in which the tank is seated in a saddle and retained in place with a circumferential strap, which would lead to an increase in height.

The mounting frame may comprise first and second neck attachments for attaching to respective neck portions at either end of the at least one storage tank. The neck attachments may be configured to allow axial and rotational movement of the at least one storage tank in an open configuration and prevent axial and rotational movement in a closed configuration. Allowing a provisional placement prior to closing the attachments allows the tanks and valves to be aligned with one another which may be preferable for connecting of gas lines etc.

Either or both of the first and second neck attachments may comprise a clamp. The clamp may be tightened to provide the closed configuration. The first and second neck attachments may comprise an annular collar in which the respective neck portions can be received. The annular collar may be configured to snugly receive the neck portions in the open configuration to allow close control when manoeuvring the tanks prior to clamping. The first or second neck attachments may comprise a bearing element to aid with positioning the tank within the attachment and/or to reduce the possibility of stress concentrations on the neck.

The operator cab may comprise a front edge and a rear edge. The at least one storage tank may overhang the rear edge. Overhanging the rear edge of the cab may help accommodate a larger tank whilst not obstructing visibility at the front of the machine. This is generally applicable but may be particularly advantageous for machines having a working arm, e.g. a lifting or loading arm, which is routinely operated at height with respect to the operator cab.

The at least one storage tank may comprise a tank valve for controlling a flow of gaseous fuel. The tank valve may be provided at the rear of the operator cab. Providing the tank valve and associated gas lines at the rear of the cab may allow for improved access for maintenance purposes. Further, it means that the front end of a housing in which the tank is located may be tapered at a front edge thereof, thereby improving efficiency and/or the aesthetics of the machine.

The at least one storage tank may be enclosed in a housing. The housing may comprise an upper surface. The upper surface may comprise an elevated portion in which the at least one storage tank resides.

The working machine may further comprise at least two storage tanks, optionally three storage tanks, optionally four or more storage tanks. The storage tanks may be located in a common horizontal plane in a side by side relation.

Each of the storage tanks may be located in a respective elevated portion of the housing. The respective elevated portions may be separated by a channel having a base and side walls extending downwards therefrom. An upper surface of the housing may comprise an undulating profile.

The side walls may comprise at least one vent hole. The vent holes may be distributed along the length of the channel/elevated portion. The side walls may be inclined away from vertical by less than 60 degrees, optionally less than 50 degrees, optionally less than 40 degrees.

The housing may comprise a multi-part enclosure comprising a lower portion and an upper portion. The lower portion and upper portion being attached to enclose the at least one storage tank. The housing may overhang the rear of the operator cab and/or the front of the operator cab.

The front of the housing may comprise a fore-aft taper. The housing may comprise a peripheral channel for channelling surface water to an outlet at either or both of the front or rear of the operator cab.

The at least one storage tank may comprise a thermally-activated pressure relief device (which may be referred to as a temperature pressure relief device), TPRD, connected to a TPRD vent line.

The TPRD vent line may comprise a vent line outlet which extends through the housing. The TPRD vent line outlet may be the provided above the operator cab. The TRPD vent line outlet may be provided towards the rear or behind a rear wall of the operator cab. The TPRD vent line outlet may be provided in an upper surface of the housing, optionally at the rear of the housing.

The vent line outlet may comprise a pressure responsive removable cap. The pressure responsive removable cap may be configured to be removed in the event of an evacuation event. The removable cap may be received within an aperture of the housing or a coupling piece which attaches to the TPRD vent line. The TPRD may be interference fitted into the housing or may comprise a frangible portion configured to break during an evacuation event. The removable cap may be tethered to the housing or vent line.

The system may comprise a plurality of storage tanks, each of the plurality of storage tanks may comprise a respective vent line outlet.

The TPRD vent line may comprise a u-bend portion comprising a drainage hole. The or each TPRD vent line may be coupled to the respective vent line outlet via a flexible collar. The flexible collar may comprise a concertinaed body.

The at least one storage tank may be in fluid communication with a filling nozzle inlet configured to receive a supply of gaseous fuel from a filling nozzle via an inlet line. The at least one storage tank may be in fluid communication with the gas engine via an outlet line. The inlet line and outlet line may be externally mounted on a post (e.g. pillar/column) of the working machine. The post may be fore post which supports the cab roof.

The machine may further comprise an inlet filling nozzle. The inlet filling nozzle (which may be referred to as fuelling receptacle) may be configured to receive a refuelling nozzle to allow the at least one storage tank to be refuelled. The inlet filling nozzle may be mounted proximate to a purge valve.

The purge valve may be operable to drain/empty the at least one storage tank of gaseous fuel.

The working machine may further comprise a shut-off valve configured to prevent flow of gaseous fuel in either or both of the inlet line and the outlet line.

The purge valve and shut-off valve may be provided within a common valve block. The inlet line may comprise a check valve configured to prevent reverse flow along the inlet line. The check valve may be located proximate the at least one tank. The check valve may be located within the storage tank housing.

The filling nozzle inlet may be attached to the operator cab. The purge valve may be attached to the operator cab. The engine may be moveable relative to the operator cab in normal service. The outlet line may comprise at least one flexible portion to configure to allow the relative movement. The flexible portion may extend between the purge valve and the gas engine.

The operator cab may be movable relative the chassis. The outlet line comprises at least one flexible portion to configure to allow the relative movement between the cab and the chassis.

The filling nozzle inlet may be located adjacent at an operator cab door and/or access steps and/or a hydraulic oil tank.

The machine may further comprise a hydraulic oil tank on a first side of the operator cab. The machine may further comprise a tool storage compartment on an opposing side of the operator cab. The machine may further comprise a plurality of access steps (which may comprise step treads) for accessing the operator cab. The tool storage compartment is located in between and/or behind the access steps.

The working machine may further comprise a compressible element located between an upper surface of the at least one storage tank and housing. The compressible element may be configured to dampen vibrational movement between the housing and the at least one storage tank in service.

The gas engine may be a hydrogen engine. The gas engine may be configured to run exclusively on hydrogen.

The working machine may comprise at least one working arm. The working arm may comprise an attachment for receiving a work implement such as a shovel, a bucket, a carriage, a tool carrier, forks. The working arm may be lifting arm, a loading arm or an excavating arm. The working machine may be a backhoe loader.

In a second aspect of the present disclosure there is provided a working machine comprising a ground engaging structure for providing propulsion over a ground surface and a chassis mounted to the ground engaging structure. The machine may have an operator cab mounted to the chassis.

The working machine may comprise a gas engine for providing propulsive power to the ground engaging structure and at least one storage tank for storing gaseous fuel for the gas engine.

The working machine may comprise a purge valve for removing gaseous fuel from the at least one storage tank. Providing a purge valve may be advantageous for emptying the at least one storage tank for, for example, storage or transportation purposes.

The purge valve may be provided local to the at least one storage tank. For example, the purge valve may be provided in a tank valve or within a housing in which the tank valve is located.

The purge valve may be located remotely from the at least one storage tank. The purge valve may be located outside the storage tank housing. The purge valve may be located within an engine housing. Providing the purge valve remote from the tank and optionally outside of the storage tank housing may help prevent the gas lines and storage tanks from being unnecessarily disturbed prior to the storage system being depressurised and emptied of fuel.

The purge valve may be located within 1.8m of the ground surface, optionally 1.5m, optionally 1.2m. Providing a purge valve at a height which is readily accessible from the ground level improves safety, particularly when the storage tank is provided at height, e.g. on the operator cab.

The working machine may further comprise a shut off valve for fluidically isolating the at least one storage tank from the gas engine. The shut off valve may be solenoid operated. The purge valve and shut off valve may be provided within a common valve block.

The purge valve may be located proximate an entrance of the operator cab. For example, the purge valve may be provided adjacent the cab access steps. The purge valve may be provided at the height of the operator cab floor.

The purge valve may be connected to the operator cab. The operator cab may comprise a plurality of vertically extending posts configured to support the operator cab roof. The purge valve may be attached to one of the posts.

The purge valve may be located adjacent an engine housing in which the gas engine is located.

The working machine may further comprise an outlet line connecting the purge valve to the outlet regulator and an engine line connecting the purge valve to the gas engine. The outlet line may comprise a rigid pipe and the engine line comprises a flexible pipe.

The working machine may further comprise a filling nozzle inlet for receiving a supply of gaseous fuel for the at least one storage tank. The filling nozzle inlet may be located adjacent the purge valve.

The filling nozzle inlet may be connected to the at least one storage tank via an inlet line and the inlet line and outlet line may run in parallel to one another along the vertically extending post.

The filling nozzle inlet may comprise a check valve. The filling nozzle inlet may comprise a filter for filtering the gaseous fuel received from a filling nozzle. The check valve is downstream of the filter. Providing a filter in the filling nozzle inlet is advantageous for filtering the gas as it enters the system. This is important for preventing contamination, which gas injectors can be particularly sensitive to. However, the presence of the filter can complicate the emptying of the at least one storage tank. Hence, providing a separate purge valve may allow a filter to be included in the inlet valve more readily.

Including the purge valve adjacent to the filling nozzle inlet may be advantageous when the purging the system. Thus, a purging device may be connected to the purge valve to drain the system whilst a source of inert gas is connected to the filling nozzle inlet.

The inlet line may comprise a tank check valve local to the at least one tank. The tank check valve may be housed within a storage tank housing.

The working machine may further comprise an outlet regulator located in between the at least one storage tank and gas engine. The outlet regulator may be configured to reduce the pressure of the gaseous fuel stored in the storage tank. The purge valve may be located downstream of the outlet regulator.

In a third aspect, there is provided a working machine comprising: a ground engaging structure for providing propulsion over a ground surface; and a chassis mounted to the ground engaging structure.

The working machine may include a gas engine configured to provide motive power to the ground engaging structure.

The working machine may include a gas storage system comprising at least one storage tank. The at least one storage tank may comprise a tank valve and may be configured to store a gaseous fuel for the gas engine.

The gas storage system may include a gas fuel line fluidly connecting the tank valve to the gas engine, and a purge valve for removing gaseous fuel from the gas storage system.

The gas storage system may include a controller configured to control the gas storage system and to activate a purge mode of the gas storage system, wherein, when the purge mode is activated, the controller is configured to open the tank valve of the at least one tank.

The controller may be configured, when the engine is in an inactive state, to open the tank valve of the at least one tank.

Providing a purge valve may be advantageous for emptying the at least one storage tank for, for example, storage or transportation purposes. Providing a controller that activates a purge mode, in response to a command from an operator, prior to purging of the gas system puts the gas storage system into a safe mode for purging of the gaseous fuel, and may help to reduce or prevent accidental purging of the gas system.

Opening all of the tank valves enables the gaseous fluid stored within each tank to flow towards the purge valve, and enables tanks that are being kept closed, e.g. due a fault, to be opened to enable them to be purged. Opening the tanks valves with the controller when the purge mode has been activated helps automate the process of purging the gaseous fuel from the gas storage system.

The working machine may comprise a manually operable control, e.g. a switch, lever or button, wherein the controller is prevented from activating the purge mode to open the tank valve of the at least one tank until the manually operable control has been actuated. This dual activation of the purge mode to avoid accidental purging of the gas storage system.

The purge valve may be manually operable, e.g. using a tool, to move the purge valve between open and closed configurations. This arrangement of manual purge valve helps to prevent accidental purging of the gas storage system.

The working machine may comprise a plurality of storage tanks each comprising a tank valve, wherein the controller is configured to open the plurality of tank valves simultaneously in the purge mode.

The gas storage system may be configured to prevent the purge mode being activated when the engine is in an active state.

The purge valve may be arranged along the gas fuel line between the tank valve and the gas engine. Providing the purge valve remote from the tank and optionally outside of the storage tank housing may help prevent the gas lines and storage tanks from being unnecessarily disturbed prior to the storage system being depressurised and emptied of fuel.

The gas storage system may comprise a tank pressure sensor configured to monitor a pressure of the at least one storage tank, and wherein, in the purge mode, the controller is configured to only open the tank valve if the pressure within the storage tank is above approximately 1 bar gauge.

The gas storage system may comprise a tank pressure sensor configured to monitor a pressure of the at least one storage tank, and wherein, in the purge mode, the controller is configured to close the tank valve when the pressure in the at least one storage tank is approximately, but not less than, 1 bar gauge. This arrangement helps to prevent the inflow of air into the storage tank after the tanks have been purged.

The controller may be configured to deactivate the purge mode when the pressure in each of the at least one storage tanks is approximately, but not less than, 1 bar gauge.

The working machine may comprise a shut-off valve for fluidically isolating the at least one storage tank from the gas engine, optionally wherein the shut-off valve is solenoid operated. Providing the shut-off valve enables flow to the gas engine to be prevented when the engine is not in use or in case of an emergency.

The purge valve may be arranged upstream of the shut-off valve along the gas fuel line.

The shut-off valve may comprise a check valve configured to prevent downstream flow of the gaseous fuel. Providing a check valve at the shut-off valve enables gaseous fuel to flow upstream from the gas engine to the purge valve, when the gas fuel line upstream of the check valve has been purged, to enable a fuel rail of the gas engine to be purged. This can be particularly advantageous if the shut-off valve fails to open when the purge mode is activated.

In the purge mode, the controller may be configured to open the shut-off valve for purging gaseous fuel from the gas engine. This allows a fuel rail of the gas engine to be purged when the purge mode is activated.

The purge valve and shut-off valve may be provided within a common valve block.

The tank valve may comprise a manual bleed valve. This arrangement provides a second manual bleed valve, for use in emergencies.

The purge valve may be located within 1.8m of the ground surface, optionally 1.5m, optionally 1.2m. Providing a purge valve at a height which is readily accessible from the ground level improves safety, particularly when the storage tank is provided at height, e.g. on the operator cab.

The working machine may comprise an outlet regulator located in between the at least one storage tank and gas engine, the outlet regulator configured to reduce the pressure of the gaseous fuel stored in the storage tank, wherein the purge valve is located downstream of the outlet regulator. The outlet regulator reduces the pressure of the gaseous fuel stored in the storage tank.

The gas fuel line may comprise an outlet line connecting the purge valve to the outlet regulator and an engine line connecting the purge valve to the gas engine, and wherein the outlet line comprises a rigid pipe and the engine line comprises a flexible pipe.

The working machine may comprise a filling nozzle inlet for receiving a supply of gaseous fuel for the at least one storage tank, wherein the filling nozzle inlet is located adjacent the purge valve. Including the purge valve adjacent to the filling nozzle inlet may be advantageous when the purging the system. Thus, a purging device may be connected to the purge valve to drain the system whilst a source of inert gas is connected to the filling nozzle inlet.

The filling nozzle inlet may comprise check valve and a filter for filtering the gaseous fuel received from a filling nozzle, and the check valve may be downstream of the filter.

The filling nozzle inlet may be connected to the at least one storage tank via an inlet line, and the inlet line may comprise a tank check valve local to the at least one tank.

The tank valve may be housed within a storage tank housing.

The purge valve may be located adjacent an engine housing in which the gas engine is located.

The purge valve may be fluidly connectable to a removeable venting tool, said venting tool configured and arranged to discharge the gaseous fuel at a predetermined height relative to the purge valve.

The working machine may comprise an operator cab mounted to the chassis, wherein the at least one storage tank is arranged on a roof of the operator cab.

Providing the storage tank on the roof of the operator cab may be considered counterintuitive in many regards, particularly for a gas engine run of exclusively one fuel type. In conventional working machines powered by diesel engines, there is a requirement for a diesel storage tank. Hence, it may be considered to be an obvious modification to replace the diesel tank with one or more gas storage tanks. This would make the conversion of a conventional diesel machine to an equivalent hydrogen machine more straightforward and may prevent having to reinvent the storage requirements. However, placing the storage tanks on the roof may be considered beneficial for numerous reasons.

For example, placing the tanks on the roof helps protect them from damage in the event of an impact when travelling on road, particularly where working machine is a backhoe loader with a relatively high cab. Also, in the event of a leak, the venting of escaped gas can be more straightforward if the tanks are provided on an upper part of the machine, at least for gases which are lighter than air, e.g. hydrogen. A further advantage is that, in the event of a vehicle fire, for example in the engine bay or one of the electrical systems in the chassis, providing the tanks higher up gives additional time for the fire to be detected before the tanks are directly heated. Further still, providing the tanks on the cab roof may help isolate the gas from electrical systems that may provide a source of ignition. Providing the storage system above the operator cab helps reduce potential operator exposure in the event of a leak, particularly for gaseous fuels lighter than air, e.g. hydrogen.

The purge valve may be located proximate an entrance to the operator cab.

The purge valve may be connected to the operator cab.

The operator cab may comprise a plurality of vertically extending posts configured to support the operator cab roof, wherein the purge valve is attached to one of the posts.

In a fourth aspect, there is provided a method of commissioning a gas storage system comprising at least one storage tank comprising a tank valve and being configured to store a gaseous fuel for the gas engine, a gas fuel line fluidly connecting the tank valve to the gas engine, and a purge valve for removing gaseous fuel from the gas storage system, the method comprising the steps of: opening the tank valve and filling the at least one storage gas with an inert gas to a predetermined pressure above 1 bar; activating a purge mode and opening the purge valve; purging the inert gas from the gas storage system until the pressure in the at least one storage tank is approximately 1 bar; opening the tank valve and filling the at least one storage gas with a gaseous fuel to a predetermined pressure above 1 bar; purging the gaseous fuel from the gas storage system until the pressure in the at least one storage tank is approximately 1 bar; and refuelling the at least one storage tank with the gaseous fuel to a desired fill level.

In a fifth aspect there is provided a generator set comprising: an electrical generator for supplying electrical energy to a battery pack and/or to an electrical energy outlet; a gas engine configured to provide motive power to the electrical generator; a gas storage system comprising at least one storage tank comprising a tank valve and being configured to store a gaseous fuel for the gas engine.

The generator set may include a gas fuel line fluidly connecting the tank valve to the gas engine, and a purge valve for removing gaseous fuel from the gas storage system.

The generator set may include a controller configured to control the gas storage system and to activate a purge mode of the gas storage system, wherein, when the purge mode is activated, the controller is configured to open the tank valve of the at least one tank.

The controller may be configured, when the engine is in an inactive state, to open the tank valve of the at least one tank.

Providing a purge valve may be advantageous for emptying the at least one storage tank for, for example, storage or transportation purposes. Providing a controller that activates a purge mode, in response to a command from an operator, prior to purging of the gas system puts the gas storage system into a safe mode for purging of the gaseous fuel, and may help to reduce or prevent accidental purging of the gas system.

Opening all of the tank valves enables the gaseous fluid stored within each tank to flow towards the purge valve, and enables tanks that are being kept closed, e.g. due a fault, to be opened to enable them to be purged. Opening the tanks valves with the controller when the purge mode has been activated helps automate the process of purging the gaseous fuel from the gas storage system.

The generator set may comprise a manually operable control, e.g. a switch, lever or button, wherein the controller is prevented from activating the purge mode to open the tank valve of the at least one tank until the manually operable control has been actuated. This dual activation of the purge mode to avoid accidental purging of the gas storage system.

The purge valve may be manually operable, e.g. using a tool, to move the purge valve between open and closed configurations. This arrangement of manual purge valve helps to prevent accidental purging of the gas storage system.

The generator set may comprise a plurality of storage tanks each comprising a tank valve, wherein the controller is configured to open the plurality of tank valves simultaneously in the purge mode.

The gas storage system may be configured to prevent the purge mode being activated when the engine is in an active state.

The purge valve may be arranged along the gas fuel line between the tank valve and the gas engine. Providing the purge valve remote from the tank and optionally outside of the storage tank housing may help prevent the gas lines and storage tanks from being unnecessarily disturbed prior to the storage system being depressurised and emptied of fuel.

The gas storage system may comprise a tank pressure sensor configured to monitor a pressure of the at least one storage tank, and wherein, in the purge mode, the controller is configured to only open the tank valve if the pressure within the storage tank is above approximately 1 bar gauge.

The gas storage system may comprise a tank pressure sensor configured to monitor a pressure of the at least one storage tank, and wherein, in the purge mode, the controller is configured to close the tank valve when the pressure in the at least one storage tank is approximately, but not less than, 1 bar gauge. This arrangement helps to prevent the inflow of air into the storage tank after the tanks have been purged.

The controller may be configured to deactivate the purge mode when the pressure in each of the at least one storage tanks is approximately, but not less than, 1 bar gauge.

The generator set may comprise a shut-off valve for fluidically isolating the at least one storage tank from the gas engine, optionally wherein the shut-off valve is solenoid operated. Providing the shut-off valve enables flow to the gas engine to be prevented when the engine is not in use or in case of an emergency.

The purge valve may be arranged upstream of the shut-off valve along the gas fuel line.

The shut-off valve may comprise a check valve configured to prevent downstream flow of the gaseous fuel. Providing a check valve at the shut-off valve enables gaseous fuel to flow upstream from the gas engine to the purge valve, when the gas fuel line upstream of the check valve has been purged, to enable a fuel rail of the gas engine to be purged. This can be particularly advantageous if the shut-off valve fails to open when the purge mode is activated.

In the purge mode, the controller may be configured to open the shut-off valve for purging gaseous fuel from the gas engine. This allows a fuel rail of the gas engine to be purged when the purge mode is activated.

The purge valve and shut-off valve may be provided within a common valve block.

The tank valve may comprise a manual bleed valve. This arrangement provides a second manual bleed valve, for use in emergencies.

The purge valve may be located within 1.8m of the ground surface, optionally 1.5m, optionally 1.2m. Providing a purge valve at a height which is readily accessible from the ground level improves safety, particularly when the storage tank is provided at height, e.g. on the operator cab.

The generator set may comprise an outlet regulator located in between the at least one storage tank and gas engine, the outlet regulator configured to reduce the pressure of the gaseous fuel stored in the storage tank, wherein the purge valve is located downstream of the outlet regulator. The outlet regulator reduces the pressure of the gaseous fuel stored in the storage tank.

The gas fuel line may comprise an outlet line connecting the purge valve to the outlet regulator and an engine line connecting the purge valve to the gas engine, and wherein the outlet line comprises a rigid pipe and the engine line comprises a flexible pipe.

The generator set may comprise a filling nozzle inlet for receiving a supply of gaseous fuel for the at least one storage tank, wherein the filling nozzle inlet is located adjacent the purge valve. Including the purge valve adjacent to the filling nozzle inlet may be advantageous when the purging the system. Thus, a purging device may be connected to the purge valve to drain the system whilst a source of inert gas is connected to the filling nozzle inlet.

The filling nozzle inlet may comprise check valve and a filter for filtering the gaseous fuel received from a filling nozzle, and the check valve may be downstream of the filter.

The filling nozzle inlet may be connected to the at least one storage tank via an inlet line, and the inlet line may comprise a tank check valve local to the at least one tank.

The tank valve may be housed within a storage tank housing.

The purge valve may be located adjacent an engine housing in which the gas engine is located.

The purge valve may be fluidly connectable to a removeable venting tool, said venting tool configured and arranged to discharge the gaseous fuel at a predetermined height relative to the purge valve.

In a sixth aspect there is provided a portable refuelling device for refuelling a vehicle, the device comprising: a refuelling outlet nozzle configured to discharge a gaseous for refuelling a vehicle; a gas storage system comprising at least one storage tank comprising a tank valve and being configured to store a gaseous fuel for the gas engine, a gas fuel line fluidly connecting the tank valve to the gas engine, and a purge valve for removing gaseous fuel from the gas storage system.

The portable refuelling device may include a controller configured to control the gas storage system and to activate a purge mode of the gas storage system, wherein, when the purge mode is activated, the controller is configured to open the tank valve of the at least one tank.

The controller may be configured, when the engine is in an inactive state, to open the tank valve of the at least one tank.

Providing a purge valve may be advantageous for emptying the at least one storage tank for, for example, storage or transportation purposes. Providing a controller that activates a purge mode, in response to a command from an operator, prior to purging of the gas system puts the gas storage system into a safe mode for purging of the gaseous fuel, and may help to reduce or prevent accidental purging of the gas system.

Opening all of the tank valves enables the gaseous fluid stored within each tank to flow towards the purge valve, and enables tanks that are being kept closed, e.g. due a fault, to be opened to enable them to be purged. Opening the tanks valves with the controller when the purge mode has been activated helps automate the process of purging the gaseous fuel from the gas storage system.

The portable refueller may comprise a manually operable control, e.g. a switch, lever or button, wherein the controller is prevented from activating the purge mode to open the tank valve of the at least one tank until the manually operable control has been actuated. This dual activation of the purge mode to avoid accidental purging of the gas storage system.

The purge valve may be manually operable, e.g. using a tool, to move the purge valve between open and closed configurations. This arrangement of manual purge valve helps to prevent accidental purging of the gas storage system.

The portable refueller may comprise a plurality of storage tanks each comprising a tank valve, wherein the controller is configured to open the plurality of tank valves simultaneously in the purge mode.

The gas storage system may be configured to prevent the purge mode being activated when the engine is in an active state.

The purge valve may be arranged along the gas fuel line between the tank valve and the gas engine. Providing the purge valve remote from the tank and optionally outside of the storage tank housing may help prevent the gas lines and storage tanks from being unnecessarily disturbed prior to the storage system being depressurised and emptied of fuel.

The gas storage system may comprise a tank pressure sensor configured to monitor a pressure of the at least one storage tank, and wherein, in the purge mode, the controller is configured to only open the tank valve if the pressure within the storage tank is above approximately 1 bar gauge.

The gas storage system may comprise a tank pressure sensor configured to monitor a pressure of the at least one storage tank, and wherein, in the purge mode, the controller is configured to close the tank valve when the pressure in the at least one storage tank is approximately, but not less than, 1 bar gauge. This arrangement helps to prevent the inflow of air into the storage tank after the tanks have been purged.

The controller may be configured to deactivate the purge mode when the pressure in each of the at least one storage tanks is approximately, but not less than, 1 bar gauge.

The portable refueller may comprise a shut-off valve for fluidically isolating the at least one storage tank from the gas engine, optionally wherein the shut-off valve is solenoid operated. Providing the shut-off valve enables flow to the gas engine to be prevented when the engine is not in use or in case of an emergency.

The purge valve may be arranged upstream of the shut-off valve along the gas fuel line.

The shut-off valve may comprise a check valve configured to prevent downstream flow of the gaseous fuel. Providing a check valve at the shut-off valve enables gaseous fuel to flow upstream from the gas engine to the purge valve, when the gas fuel line upstream of the check valve has been purged, to enable a fuel rail of the gas engine to be purged. This can be particularly advantageous if the shut-off valve fails to open when the purge mode is activated.

In the purge mode, the controller may be configured to open the shut-off valve for purging gaseous fuel from the gas engine. This allows a fuel rail of the gas engine to be purged when the purge mode is activated.

The purge valve and shut-off valve may be provided within a common valve block.

The tank valve may comprise a manual bleed valve. This arrangement provides a second manual bleed valve, for use in emergencies.

The purge valve may be located within 1.8m of the ground surface, optionally 1.5m, optionally 1.2m. Providing a purge valve at a height which is readily accessible from the ground level improves safety, particularly when the storage tank is provided at height, e.g. on the operator cab.

The portable refueller may comprise an outlet regulator located in between the at least one storage tank and gas engine, the outlet regulator configured to reduce the pressure of the gaseous fuel stored in the storage tank, wherein the purge valve is located downstream of the outlet regulator. The outlet regulator reduces the pressure of the gaseous fuel stored in the storage tank.

The gas fuel line may comprise an outlet line connecting the purge valve to the outlet regulator and an engine line connecting the purge valve to the gas engine, and wherein the outlet line comprises a rigid pipe and the engine line comprises a flexible pipe.

The portable refueller may comprise a filling nozzle inlet for receiving a supply of gaseous fuel for the at least one storage tank, wherein the filling nozzle inlet is located adjacent the purge valve. Including the purge valve adjacent to the filling nozzle inlet may be advantageous when the purging the system. Thus, a purging device may be connected to the purge valve to drain the system whilst a source of inert gas is connected to the filling nozzle inlet.

The filling nozzle inlet may comprise check valve and a filter for filtering the gaseous fuel received from a filling nozzle, and the check valve may be downstream of the filter.

The filling nozzle inlet may be connected to the at least one storage tank via an inlet line, and the inlet line may comprise a tank check valve local to the at least one tank.

The tank valve may be housed within a storage tank housing.

The purge valve may be located adjacent an engine housing in which the gas engine is located.

The purge valve may be fluidly connectable to a removeable venting tool, said venting tool configured and arranged to discharge the gaseous fuel at a predetermined height relative to the purge valve.

The skilled person will appreciate that except where mutually exclusive, a feature described in relation to any one of the aspects, embodiments or examples disclosed herein may be applied to any other aspect, embodiment or example. Furthermore, except where mutually exclusive, any feature described herein may be applied to any aspect and/or combined with any other feature described herein.

### BRIEF DESCRIPTION OF DRAWINGS

Embodiments will now be described by way of example only with reference to the accompanying figures, in which:
Figures 1a to 1e show a working machine from the left, right, front, top and front-left perspective;
Figures 2a and 2b show a gas storage system from rear and forward perspective views with an upper housing portion removed according to the present disclosure;
Figures 3a to 3c show side, rear perspective and plan views of a gas storage tank mounting frame of the gas storage system of Figures 2a and 2b;
Figures 4a to 4c show a filling nozzle inlet, shut-off valve, purge valve and associated housings according to the present embodiment;
Figure 5 shows a storage compartment provided in an embodiment of the working machine of shown in Figures 1a to 1e;
Figures 6a and 6b show an alternative storage location for a plurality of storage tanks according to the present disclosure;
Figures 7a and 7b show a yet further alternative storage location for one or more storage tanks according to the present disclosure; and,
Figure 8 shows a schematic diagram of the gas storage system of the present disclosure.

### DETAILED DESCRIPTION

In the following detailed description, numerous specific details are set forth in order to provide a thorough understanding of various embodiments and the inventive concept. However, those skilled in the art will understand that: the present invention may be practiced without these specific details or with known equivalents of these specific details; that the present invention is not limited to the described embodiments; and, that the present invention may be practiced in a variety of alternative embodiments. It will also be appreciated that well known methods, procedures, components, and systems may have not been described in detail.

The same reference numerals may be used for corresponding features throughout the drawings. In such cases, the description of these features may not be repeated.

The present disclosure provides advantageous storage systems for a working machine. The principal storage location may comprise the roof of an operator cab which provides sufficient footprint area for a plurality of storage tanks. However, further embodiments show additional or alternative locations along the side of the machine between the front and rear wheels, or underneath the machine, optionally towards the rear of the machine. Providing multiple storage locations allows the amount of gaseous fuel to be adapted according to a desired use.

The present disclosure provides multiple solutions for the storage of a gaseous fuel, each of which may be used in isolation of the other features or in combination. To simplify the disclosure, the various solutions are described with reference to a working machine in the form of a backhoe loader. However, it will be appreciated that similar storage solutions may be provided on other forms of working machine such as wheeled loading shovels, telehandlers, forklift trucks, tractors, excavators or others disclosed in the background section. Hence, although the storage solutions described herein are particularly advantageous for a backhoe loader due to the existing machine layout and architecture, references to a backhoe loaders may be interchangeable with other working machines where suitable. It will also be appreciated that similar storage solutions may be provided on other forms of apparatus, such as generator sets or portable refuelling devices.

Conventional backhoe loaders, as with other working machines, typically comprise prime movers in the form of diesel engines. The present disclosure is concerned with working machines which utilise gas engines which operate using a gaseous fuel. Of particular relevance in the present disclosure are gas engines in the form of hydrogen engines. Hydrogen engines are known in the art and not described in detail in the present disclosure for the sake of brevity. Suffice to say that the gas engine of the working machine is configured to receive a flow of gaseous fuel from a gas storage system according to the present disclosure.

The gas engine may be configured to operate solely on gaseous fuel. Hence, the gas engine may be considered to be a single fuel engine rather than a hybrid or dual fuel engine configured to operate on, for example, compressed natural gas and hydrogen, or some other combination of gaseous or liquid fuels.

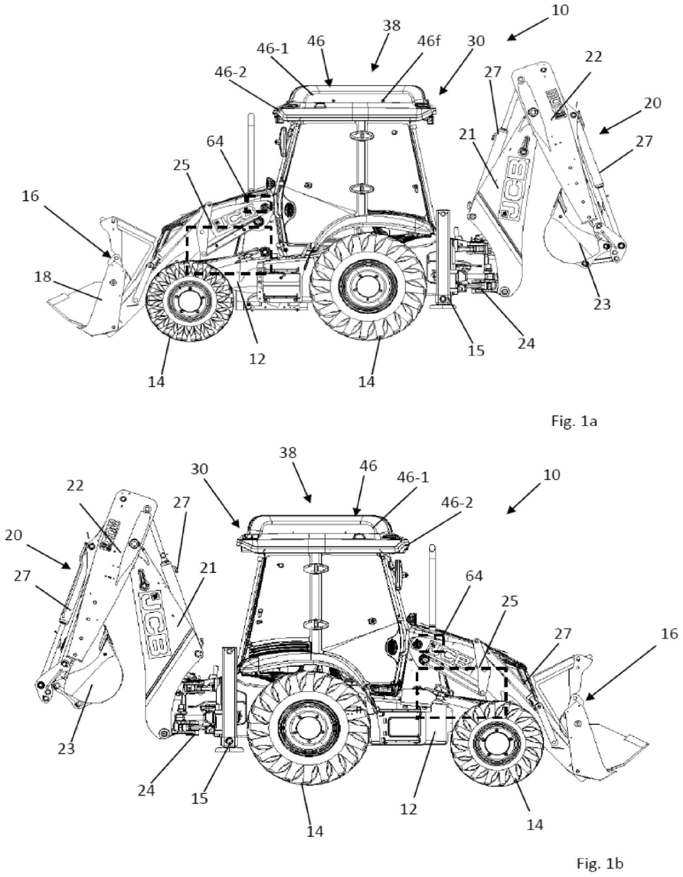

Figure 1a to 1e show a working machine 10 in the form of a backhoe loader. The working machine 10 has a chassis 12 mounted to and supported by a ground engaging structure which provides propulsion over a ground surface. The ground engaging structure may be provided in the form of wheels 14. Mounted on the chassis is a lifting or loading arm 16 to which is mounted an implement. In some embodiments, the implement may be a loading shovel 18, although any suitable implement may be attached to the arm 16. The loading arm 16 and loading shovel 18 may be mounted on the front of the machine 10. The machine 10 may be described in relation to a principal axis 11 which extends fore-aft along a centreline of the machine 10.

Mounted on the back of the machine 10 is a working arm 20 (which may be referred to a backhoe). The working arm 20 may include a boom 21 and a dipper arm 22. In the illustrated embodiment, a bucket 23 is mounted to the working arm 20, but any suitable implement may be attached to the working arm. The machine 10 includes a gas engine 25 which provides motive power to drive the machine 10 over the ground. Put another way, the gas engine 25 is configured to provide motive power to the ground engaging structure 4 to drive the machine 10 over the ground. The gas engine 25 provides power to operate a hydraulic pump (not shown) which can selectively provide pressurised hydraulic fluid to various rams 27 to operate, by way of example, the loading arm, loading shovel, boom, dipper, bucket etc so as to enable material to be handled. The gas engine 25 may be housed within a conventional engine housing comprising, for example, a front facing grill, sidewalls, fire wall and a bonnet (as shown but not numbered).

The machine 10 includes an operator cab 30 mounted to the chassis. The operator cab 30 includes an operator seat and operator controls such as a steering wheel, a foot brake, a foot throttle, a hand throttle and backhoe control lever. The operator seat may face forwards and be rotatable such that it can face rearwards to enable operation of the working arm 20. Access to the operator cab 30 may be provided by a plurality of steps, as shown. The steps are conventional and not explained further. Steps may be provided on either or both sides of the machine 10 depending on the layout of the machine 10 and/or operator cab 30.

The working arm 20 is mounted to the chassis 12 via a vertical pivot mounting, commonly referred to as a king post 24, which allows the arm to slew left and right relative to the chassis. The working arm 20 is shown as being in a pre-work position longitudinally aligned position such that an extension axis of the boom 21 and dipper arm 22 is generally aligned with the longitudinal or principal axis 11 of the machine 10. The working arm 20 would typically be moved into a transverse position so as to lie alongside and parallel to the rear of the cab 30 for transport. Retractable telescopic stabilizer legs 15 may be provided for stabilizing the machine 10 when the working arm 20 is operable.

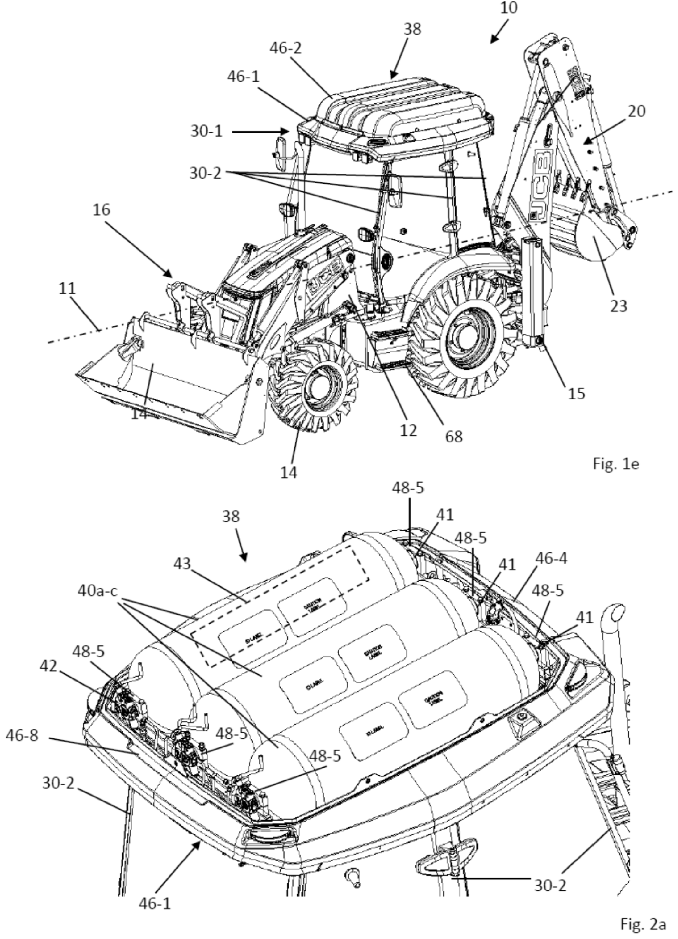

With additional reference to Figures 2a to 3c, the working machine 10 comprises a gas storage system 38. The gas storage system 38 includes a plurality of storage tanks 40a-c and associated tank valves 42. The gas storage system 38 may be provided within a housing 46 on the operator cab 30. The storage system 38 is configured to receive, store and deliver gaseous fuel to the engine 25. In the embodiment shown, there are three elongate cylindrical storage tanks 40a-c having corresponding longitudinal axes arranged in parallel in a fore-aft direction so as to be aligned with the principal axis 11. It will be appreciated that in some embodiments there may be more or fewer storage tanks 40a-c and they may be orientated differently, e.g. transverse to the principal axis 11.

The storage tanks 40a-c may be arranged in a side-by-side axially aligned relation in a common horizontal plane. However, in some embodiments of the present disclosure it may be preferable to have the tanks 40a-c vertically or axially offset with respect to one another, depending on the desired external shape or other packaging considerations.

The storage tanks 40a-c are enclosed in the housing 46 which is attached to the top of the operator cab 30. The housing 46 may be attached to or provide the operator cab roof 30-1. Put another way, the plurality of storage tanks 40a-c are arranged on the roof 30-1 of the operator cab 30. In embodiments, the housing 46 may be provided by a unitary structure which extends over the storage tanks 40a-c etc, or, as shown, may comprise a multi-part structure which is assembled around the storage tanks 40a-c. Thus, as can be seen, there the housing 46 may comprise a lower part 46-1, which is located on the top of the operator cab 30, and an upper part 46-2 which is received by and attached to the lower part via a plurality of suitable fixings. The roof of the cab 30 may be understood to be an upper member of the cab 30 which provides a canopy under which an operator is located when operating the machine 10.

The mating of the upper and lower parts 46-1, 46-2 may be provided by any suitable attachment such as a plurality of circumferentially distributed fixings 46f, such as bolts. A compressible seal (not shown) may additionally be provided between the lower and upper structures 46-1, 46-2 to prevent ingress of water.

The lower part 46-1 may comprise an annular member which is located around the plurality of storage tanks 40a-c and has a sidewall 46-4 which extends upwardly to partially surround the storage tanks 40a-c. An external surface of the lower part 46-1 may be angled relative to horizontal for aesthetic purposes and to provide adequate run off. The lower part 46-1 may additionally provide support for one or more lights or other ancillary components as shown in Figure 1e for example, but not labelled.

The lower part 46-1 may comprise a base wall (not shown) which extends underneath the storage tanks 40a-c and which attaches to the operator cab 30. However, a base wall may be omitted in some embodiments with the sidewall 46-4 being attached to the top of the operator cab 30 around the storage tanks 40a-c or to the mounting frame 48 which carries the storage tanks 40a-c. Regardless of whether the lower part 46-1 comprises a base wall, the top of the operator cab 30 may comprise an internal liner or structural panel to separate the interior of the operator cab 30 from the storage system 38. Generally, the operator cab 30 may be fluidly isolated from the storage system 38 so that storage system to prevent ingress of the gaseous fuel into the cab 30.

A drainage channel 46-3 may be provided around the periphery of the housing 46, for example around the base of the upper part 46-2 where it mates with the lower part 46-1. The drainage channel 46-3 may comprise one or more outlets 46-8 located at either or both the front and rear of the operator cab 30 so that water can exit at a desired location.

As shown, the upper part 46-2 may comprise a plurality of elevated portions 46-5 which extend longitudinally along the housing 46 in alignment with the storage tanks 40a-c. Each elevated portion 46-5 may correspond to and partially receive a portion of a respective storage tank 40a-c. As such the number of elevated portions 46-5 may correspond to the number of storage tanks 40a-c.

The elevated portions 46-5 are defined in part by elongate channels 46-6 which extend front to back between adjacent tanks 40a-c to provide a trough or gutter. Each channel 46-6 may be formed by a base wall 46-6b and opposing side walls 46-6sw which extend between the base 46-6b to the upper surfaces of the elevated portions 46-5. It will be appreciated that the side walls 46-6sw may equally be thought of as part of the elevated portions 46-5.

The side walls 46-6sw are angled relative to vertical so as to be inclined at approximately 40 degrees to the base wall 46-6b which extends horizontally therebetween. It will be appreciated that the form of the elevated portions 46-5 and channels 46-6 may vary according to different embodiments and may include rounded surfaces as well as or instead of the facetted surfaces shown in the drawings.

In order to provide suitable ventilation for the housing 46 some embodiments may include ventilation apertures positioned to allow an escape of any gaseous fuel which has escaped from the storage tanks 40a-c, valves 42 or gas lines 44 provided within the housing 46.

Ideally, for hydrogen and other gaseous fuels which are lighter than air, it is preferable to provide ventilation at the highest location in the housing 46 thereby removing the need for forced ventilation. In the embodiment shown, the side walls 46-6sw includes a plurality of apertures 46-7 suitable for venting any escaped gas from the storage tanks 40a-c. The venting apertures 46-7 may be provided in any desirable suitable location but are advantageously distributed along the length of the channel side walls in the described embodiment so as to prevent any local build-up of escaped gas. Each side wall 46-6sw comprises three apertures equally distributed along the length of the housing 46 but more or fewer may be provided. The outermost elevated portions 46-5 may include downwardly inclined flanks located along an outboard edge thereof which may also include suitable venting apertures 46-7, as described.

Providing the apertures 46-7 on an elevated and inclined surface can help reduce ingress of water, e.g. rain water, into the interior of the housing 46. As such, the apertures 46-7 may be open at all times and have a relatively small diameter to prevent ingress of water or other foreign matter into the housing 46 in normal use. However, in some embodiments, it may be preferable to provide the apertures with hoods which overhang the aperture 46-7 to help deflect water away. In some embodiments, the present disclosure may comprise a housing 46 with forced ventilation in which a blower unit, e.g. a fan, is arranged to provide a flow of air to expel any leaked gas. The sizes of the apertures 46-7 may be between 3mm and 15mm, optionally between 5mm and 10mm in diameter.

The gas storage system 38 may comprise one or more compressible elements 41 located between an upper surface of one or more of the storage tanks 40a-c and an underside of the upper part 46-2 to provide some cushioning therebetween and, optionally, provide some force distribution from foreign object strikes.

The storage tanks 40a-c may be carried by a mounting frame 48. The mounting frame 48 may comprise one or more mounting members for receiving the tanks 40a-c and any suitable arrangement of structural members for distributing the weight of the tanks 40a-c across the structural frame of the operator cab 30. Thus, the mounting frame 48 may comprise a framework of cross-members 48-1, 48-2 which extend transverse to the longitudinal axes of the tanks 40a-c and a plurality of interconnected longitudinal members 48-4 to provide sufficient strength and rigidity. The mounting frame 38 may be mounted to the cab 30 via one or more attachment members which are attached to one or more structural members of the operator cab 30.

The mounting frame 48 and the storage tanks 40a-c and associated valves 42 and gas lines 44 may be provided as a sub-assembly for loading on the cab 30 as a single unit. In doing so, there is provided a convenient way of assembling and testing a gas storage system 38 for a working machine 10 prior to mounting it the working machine 10.

In the embodiment shown, the mounting frame 48 comprises fore and aft cross members 48-1, 48-2 which extend laterally in front of and to the rear of the tanks 40a-c. The cross members 48-1, 48-2 may be spanned by one or more longitudinal members 48-4 which provide rigidity and stability to the cross members 48-1, 48-2 and help prevent stress in the storage tanks 40a-c which span therebetween. The cross members 48-1, 48-2 and/or longitudinal members 48-4 may be attached to the operator cab 30 by a plurality of attachment members in the form of legs 48-3. The legs 48-3 may be attached via any suitable fixings e.g. threaded bolts, or via welding, for example. In the embodiment shown, the legs 48-3 extend from the cross-members 48-1, 48-2 or longitudinal members 48-4 to a height shortly below the underside of the tanks where they terminate in rectangular pads which are bolted to the cab.

The mounting frame 48 may be attached to the structural framework of the operator cab 30 so to provide sufficient support. The structural framework of the operator cab 30 may vary between embodiments, but in the machine shown comprises a plurality of posts 30-2 having cross members 30-3 extending therebetween. More specifically, there is provided fore, aft and mid cab posts 30-2 which extend upwardly from the operator cab floor with cross members 30-3 connecting the terminal ends thereof so as to from a ring beam. Fore and aft transverse cross members 30-3 which respectively extend between the fore and aft cab posts 30-2 are configured to have the mounting frame 48 mounted thereto such that the weight of the storage tanks 40a-c can be reacted by the cross members 30-3 and cab posts 30-2 to the chassis 12. Although the mounting frame 38 of the embodiment shown extends between transverse cross members, additional or alternative attachments may be made to the side cross members which extend fore aft between the fore, mid and aft posts.

It will be appreciated that the lower part 46-1 and/or upper part 46-2 of the housing 46 may be attached to the mounting frame 48 or direct to the structural framework of the cab 30.

The mounting of the storage tanks 40a-c to the mounting frame 38 may be by any suitable means. In the embodiment shown, the storage tanks 40a-c are neck mounted. As such, each storage tank 40a-c comprises neck portions 41 at either end which are received by suitable mounting features provided on the mounting frame 48. The tank neck portions 41 may comprise relatively short cylindrical bosses which extend axially and concentrically with the longitudinal axis of the respective tank 40a-c. Thus, the mounting frame 48 may comprise first and second neck attachments 48-5 for receiving the respective neck portions 41 at either end of the storage tanks 40a-c.

The neck attachments 48-5 may comprise any suitable attachment mechanism. In the described embodiment, the neck attachments 48-4, 48-5 comprise annular collars comprising a cuboidal block having a circular aperture therethrough for snugly receiving the neck portions 41. The neck attachments 48-5 and corresponding neck portions 41 may comprise a close tolerance fit which allows for axial and rotational movement to allow for suitable positioning once the mounted. As such, tank valves 42 which are provided on an end of each tank 40a-c, may be axially and rotationally aligned for connection to the gas lines 44.

Either or both of the collars 48-5 provided at the opposing ends may comprise a clamp which is operable to fixedly attached the respective storage tank 40a-c to prevent axial or rotational movement in the correct position. Thus, either or both of the neck attachments 48-5 may comprise an open configuration in which the tank position is adjustable and a closed configuration in which the tank position is fixed in relation to the mounting frame 48.

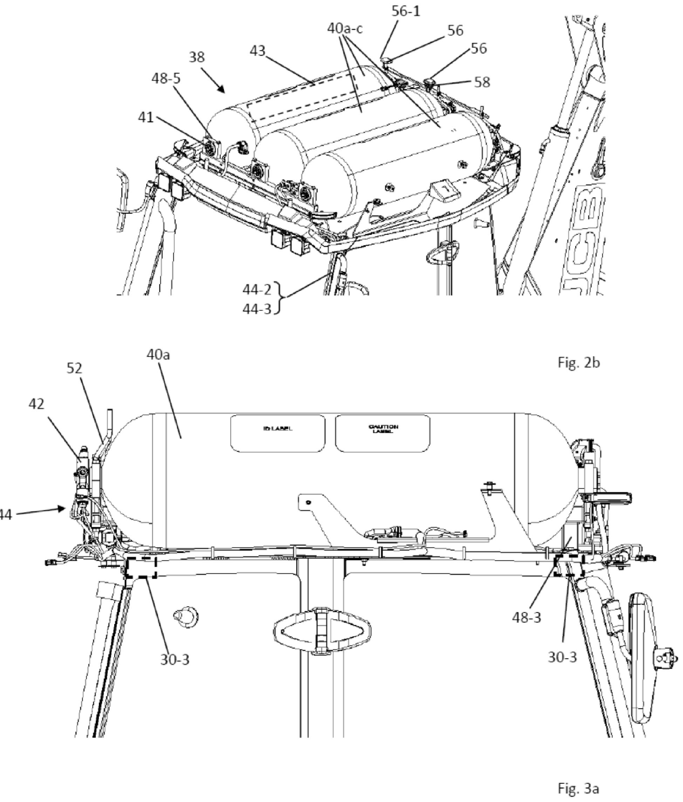

The clamp may be provided by closing the diameter of the annular collar about the neck portion 41. In the embodiment shown, neck attachment 48-4 comprises a closed, full annular collar which is not adjustable, whilst neck attachment 48-5 comprises an open annulus having radially separated ends which are closed via a tangential clamping bolt. Alternatively, the clamp may be provided by a two part fixture comprising a semi-circular saddle mounted to the mounting frame 48 and an opposing semi-circular clasp which sits over the neck and bolts to the saddle. As shown, the neck attachments 48-5 may be fixed to the cross members via bolts, the heads of which can be best seen in Figure 2b. The fixing bolts may also act as clamping bolts. In some embodiments either or both of the neck attachments 48-5 may comprise a liner to act as a bearing element to assist with positioning and/or to help prevent local stress concentrations on the respective neck portion 41.

An alternative method of attaching the tanks 40a-c to the operator cab 30 may be with the use of tank straps which extend circumferentially around the tanks. However, tank straps typically require a saddle on to which the storage tanks 40a-c can be mounted adding height to the overall structure. The provision of neck attachments 48-4, 48-5 is favourable in that it allows the height of the tanks 40a-c to be lowered with respect to the top of the operator cab 30. Hence, the underside of the storage tanks 40a-c may be provided proximate to the operator cab roof lining which provides the interior of the cab 30.

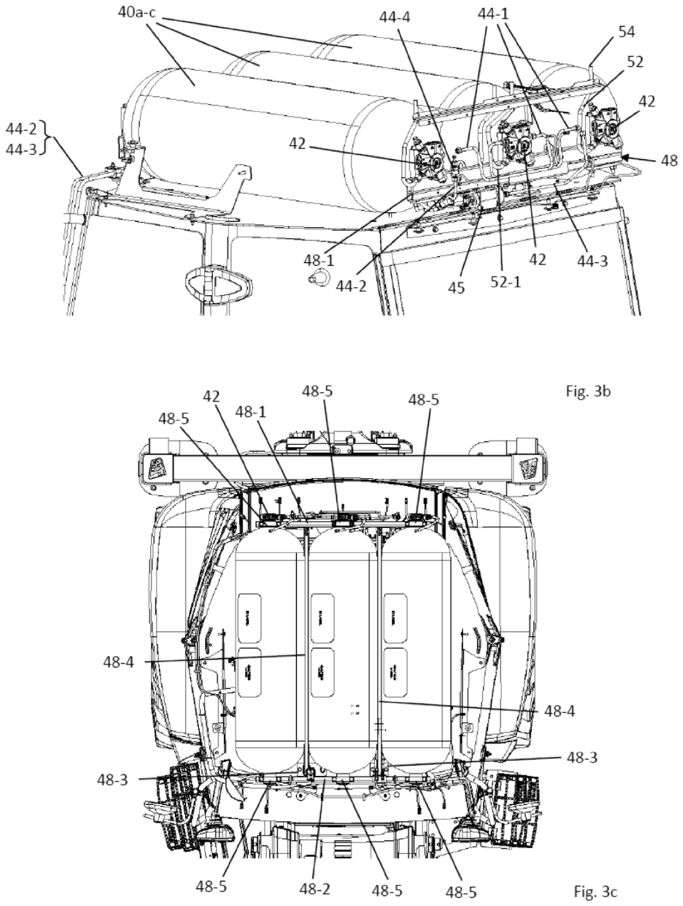

As can be best seen in the side view of Figure 3a, the tanks 40a-c may be configured to overhang the front and/or rear of the cab 30 to usefully increase the capacity of the tanks 40a-c or to reduce the height of the tank storage system 38 and height of the machine 10. In the embodiment shown, the front of the tanks 40a-c seen on the right hand side of the drawing are provided approximately in-line with the operator cab fore cross member, with an overhang provided at the rear. Providing no or limited overhang at the front of the operator cab 30 may be beneficial for improving visibility, for example, when using the loading arm 16 which is often operated at height. However, the visibility requirements are generally less at the rear of a backhoe loader due to the work undertaken with the working arm 20, hence the overhang may be larger on the rear. In the present embodiment, the overhang at the rear is limited to prevent any possible contact with the working arm during normal operating activities or when the arm 20 is in a transverse transport position. In machines without such a working arm or which have reduced visibility requirements the tanks 40a-c may be configured to overhang further.

The extent of the overhang in the embodiment shown is less than 10% of the length of the tanks 40a-c from the terminal end of tank valve 42 to a tank cap inserted in the neck portion 41 at the opposing end. However, the overlap may be greater in some embodiments. In order to provide the necessary support to the storage tanks 40a-c when overhanging, the rear supporting legs 48-3 may be provided on the longitudinal members 48-4 inboard of the cross members 48-1, 48-2.

The width of the mounting frame 48 and collective width of the storage tanks 40a-c may be constrained to be within the width of the operator cab 30 to help prevent impacts from foreign objects which do not contact the cab side walls.

The height of the storage system 38 including the tanks 40a-c and housing 46 may be any desirable. In embodiments where the working machine 10 is a backhoe loader, the height of the housing 46 may be advantageously below the upper extent of the working arm 20 when in a transport position thereby helping to reduce the likelihood of accidental collision with an overhead obstacle when manoeuvring the machine 10.

Each tank 40a-c may be provided with a tank valve 42. The tank valve 42 may be mounted to the respective neck potion 41. Each tank 40a-c may comprise one or more of the group comprising: a tank shut-off valve, a pressure sensor, a temperature sensor and a thermally-activated pressure relief device, TPRD, an inlet port and an outlet port.

The working machine 10 may be provided with a controller 64 configured to control the gas storage system 38 The tank valves 42 may be communicably connected to the controller 64. In use, the controller 64 controls opening and closing of the valves 42 and receives operating data therefrom. In some embodiments, each tank valve 42 may include a manually operable bleed valve or auxiliary purge valve. The bleed valve may be the valve 91.

The gas storage system 38 includes a gas flow path fluidly connecting the tank valve 42 of each gas storage tank 40a-c to the gas engine 25. The gas flow path includes a plurality of gas lines, inlet lines, outlet lines etc. as is discussed in more detail below. As best seen in Figure 3b, the tank valves 42 may be connected in flow communication via a single gas line 44-1 which connects the plurality of tanks 40a-c together. Put another way, the gas flow path includes a connecting gas line 44-1 which extends between the first tank 40a and second tank 40b and the second tank 40b and third tank 40c to connect the plurality of tanks 40a-c together. An inlet line 44-2 may be connected to gas line 44-1 between the first and second tanks 40a,b via a T-piece, with an outlet line 44-3 connected to the connecting line between the second and third tanks 40-b,c via a second T-piece.

A regulator 45 may be provided along the gas flow path to reduce the pressure from the storage tanks 40a-c to a useable pressure. The regulator 45 may be arranged local to the tank valves 42 to reduce the pressure in outlet line 44-3 to a useable pressure. Providing the regulator 45 local to tank valves 42, that is, within the housing 46, allows the pressure to be reduced prior to being transported to the engine 25, thereby reducing the extent of the high pressure line. Further, providing the regulator 45 as part of the storage system 38 sub-assembly allows it to be tested prior to being mounted to the machine 10.

The inlet line 44-2 may comprise a check valve 44-4 which prevents a return flow of gas from the tanks 40a-c back to the filling nozzle inlet 50 (described below). The check valve 44-4 may be provided anywhere along the inlet line 44-2, however, providing it local to the storage tanks 40a-c and within the housing 46 is advantageous as it prevents a reverse flow of high-pressure gas from the storage tanks 40a-c should the high-pressure inlet line 44-1 become damaged between the filling nozzle inlet 50. In alternative embodiments, the check valve 44-4 may be provided in the first tank valve 42. In such an embodiment the high-pressure inlet line 44-1 would need to be connected to a separate port of the valve 42 rather than T-ing into the connecting line 44-1.

The storage tanks 40a-c may be configured to carry up to 20kg, optionally 15kg, optionally 9kg of hydrogen when fully loaded. The storage tanks 40a-c may be configured to have a rated operating pressure of up to 35MPa (350bar/5076psi), 50Mpa (500bar/7251psi) or 70Mpa (700bar/10kpsi), depending on the application. Higher or lower pressures may be possible in some embodiments. It will be appreciated that the inlet line 44-1 will be configured to carry at least the same pressure as the pressure rating of the tanks 40a-c. The working pressure of the gas delivered to the engine 25 may be between 5 and 15bar (0.5Mpa and 1.5Mpa/72psi and 218psi).

Each storage tank 40a-c, e.g. each tank valve 42, may comprise a thermally activated pressure relief device, TPRD, 85. The TPRD may be configured to act as a temperature responsive valve which fully opens to vent the content of the storage tanks 40a-c in the event of an ambient temperature which exceeds a predetermined threshold. TPRDs are known and generally required to ensure hydrogen is vented in the event of a fire. In other words, TPRDs provide a thermal fuse which blows when a fire is present to prevent pressure build up in the tanks 40a-c.

Each TPRD 85 is connected to a vent line 52. The TPRD vents the content of the storage tanks 40a-c via the vent line 52. The regulator 45 is provided with a pressure relief valve 94. The pressure relief valve 94 associated with the regulator 45 is connected to the vent line 52.

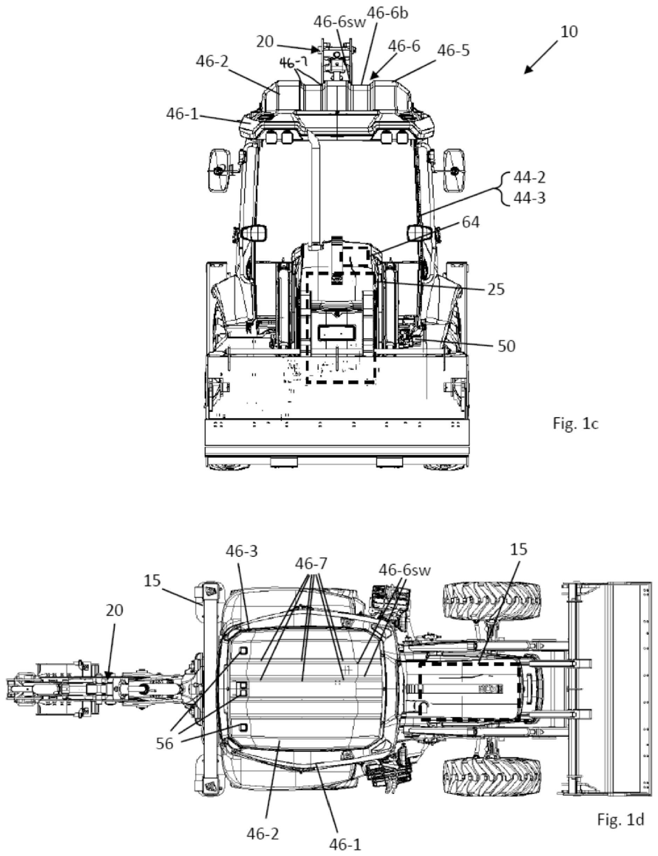

The vent line 52 comprises an open passageway which extends from a TPRD port on the tank valve 42 to a vent line outlet in the housing 46. The vent line outlet 54 may be provided in any suitable form and location on the housing. In the embodiment shown, the vent line outlet 54 is provided by a capped aperture in the upper part 46-2 of the tank housing 46. More specifically, in an upper surface of the elevated portions 46-5, as best seen in Figures 1d and 2b.

Each vent line outlet 54 comprises a pressure responsive removable vent cap 56 which is retained within an aperture in the housing 46 via a suitable interference fit. The fit between the cap 56 and the aperture is such that it will be overcome by the exiting gas in the event of a sudden discharge event. As can be seen, the removable cap 56 may comprise a tether 56-1 which is attached to the housing 46 or elsewhere such that the cap 56 is retained if removed during an evacuation event. This not only prevents the cap 56 being lost or causing possible injury or damage within the vicinity of the machine 10 but may also provide a clear indication that there has been an evacuation from a quick visual inspection by an operator.

As can be seen, the vent line outlets 54 are provided at the rear of the tank housing 46 such that the exhausting gas may be expelled further from the engine bay and any potential sources of ignition. The uppermost location of the vent line outlets 54 also aid the safe evacuation of escaped gas. In the embodiment shown there are four vent line outlets 54, one for each of the tanks 40a-c within the corresponding elevated portions 46-5 and a further one of the regulator 45. The distal ends of the vent lines 52 may be supported with an elongate cross member which extends between each vent line 52.

In order to reduce the weight of the housing 46, the construction may comprise relatively thin sheet material. As such, there may be some movement between the housing 46 and the storage tanks 40a-c or TPRD vent lines 52 in use. In order to allow for some relative movement and a lighter weight housing, flexible connectors 58 may be provided between the vent lines 52 and the aperture in the housing 46.

The flexible connector 58 may comprise a flexible portion of the vent line 52 or may comprise a flexible collar which is configured to axially flex to accommodate in service misalignments between the housing 46 and vent line 52. The flexible collar may be mated with the aperture and receive the vent line 52 within a central aperture. In the embodiment shown, the flexible connector 58 has a form similar to a gearstick or CV joint boot as known in the art. Thus there are a base which is attached to the aperture in the housing 46 and mates with the cap 56, and a concertinaed conical body which can axially flex in any direction and includes a central aperture which sealably receives the vent line 52.

As will be appreciated, the removable vent cap 56 may be sealably received within the housing aperture or flexible connector 58 so as to help prevent ingress of water into the vent line 52. To help further reduce water ingress the vent outlets 54 may be provided on the elevated portions of the housing 46, are previously noted, where they are exposed to less surface water vis-à-vis the channels.

In the event water enters the vent lines 52 it is important to allow it to drain to prevent a potential obstruction from the water, particularly where freezing may occur. As such, the vent lines 52 may comprise a u-bend below the tank valve 42 and/or TPRD which includes a small drainage hole 52-1 (Figure 3b) to allow any water to be drained. The drainage hole 52-1 may be located in the lowest part of the vent line 52.

Inlet line 44-1 provides fluid communication between the filling nozzle inlet 50 and the storage tanks 40a-c. The filling inlet nozzle 50 may be provided at any convenient location an operator can readily access for the purposes of connecting a refuelling filling nozzle. In the present disclosure, the filling nozzle may be provided in a location which has a fixed relation to the storage tanks 40a-c such that there is minimal relative movement between the filling nozzle inlet 50 and the storage tanks 40a-c. In doing so, the high pressure inlet line 44-1 can be provided with a rigid pipeline as there is no requirement to allow for differential movement. The alternative might be to use a flexible connection in the high pressure line, however, this is generally more troublesome and prone to a failure.

In the present disclosure the working machine 10 may comprise an operator cab 30 which is configured to move relative to the chassis 12 to increase operator comfort. The relative movement may be provided using antivibration mounts as known in the art.

In such an arrangement, the filling nozzle inlet 50 may be attached to the structural framework of the operator cab 30, such as a post 30-2. In the embodiment shown, the filling nozzle inlet 50 is provided on a fore post 30-2 adjacent the cab access steps at a conveniently accessible height. The location is thus between the front and rear wheels and inboard thereof to help prevent accidental damage to the inlet 50 from foreign object strikes in use of the machine 10. The height may be that determined by the top of the cab access steps 68 and/or local to or below a cab door handle.

Providing the filling nozzle inlet 50 in this location is advantageous on the backhoe loader as the height is generally convenient for most users and the fore cab post provides suitable support for the gas inlet line 44-2 extending up to the tanks. In some embodiments, the filling nozzle inlet 50 may be provided adjacent one or more other regularly accessed service points, such as a hydraulic oil tank 66 or screen wash bottle, for example. This provides convenience for an operator.

The inlet line 44-2 may be surface run on the fore post 30-2 with appropriate spaced fixings. Surface running of the inlet line 44-2 ensures any escaped gas is vented. However, one or more aerated housing element (not shown) may be provided around the inlet line 44-2 to provide a mechanical shield. The housing element may comprise a cage or perforated sheet which is located around the inlet line 44-2, or simply an open channel or side wall which extends alongside and projects outwardly from the post 30-2 further than the inlet line 44-2. In some embodiments of the present disclosure, the inlet line 44-2 may be internal to a cab post 30-2 provided suitable ventilation is provided.

The filling nozzle inlet 50 may be located within a housing 50-1 having a hinged door 50-2 to provide access. The door 50-2 may be horizontally hinged along the lower edge such that it readily remains in the open position under the force of gravity once unlocked and may provide a rest for the filling nozzle once attached.

The lower pressure outlet line 44-3 extends between the outlet regulator 45 and engine 25. The lower pressure outlet line 44-3 may be surface run on the same fore post 30-2 as the high pressure inlet line 44-2. The outlet line 44-3 may pass through a shut-off valve 60 which is operable to prevent flow from the outlet regulator 45 to the gas engine 25 when the engine is not in use. Put another way, the shut-off valve 60 is configured and arranged to fluidically isolate the or each storage tank 40a-c from the gas engine 25. The valve 60 may an electrically operated solenoid valve which is operatively connected to a controller 64. The controller 64 may be or form part of a conventional engine control unit (ECU) of the engine 100, or may be a standalone controller. In some embodiments, the shut-off valve 60 includes a check valve configured to prevent downstream flow of the gaseous fluid.

The controller 64 may comprise any suitable circuitry to achieve control of valve 60 as required for the operation of the engine 25. As such, the valve 60 may be opened and closed as part of a start-up and shut down procedure, for example.

The controller 64 may comprise: control circuitry; and/or processor circuitry; and/or at least one application specific integrated circuit (ASIC); and/or at least one field programmable gate array (FPGA); and/or single or multi-processor architectures; and/or sequential/parallel architectures; and/or at least one programmable logic controllers (PLCs); and/or at least one microprocessor; and/or at least one microcontroller; and/or a central processing unit (CPU), to perform the described methods. The controller 64 may include an associated memory or the memory may be located locally to the controller or remotely. The memory may be a non-volatile memory, for example, read only memory, erasable programmable read only memory, flash memory, solid state drives or magnetic memory.

It will be appreciated that the gas storage system 38 may require emptying or purging for maintenance or transporting purposes amongst others. As such, the gas storage system 38 may comprise one or more purge valves which are operable to remove the gas within the storage system 38. The one or more purge valves may be provided anywhere in the storage system 38. Put another way, the one or more purge valves may be provided anywhere along the gas flow path between the tank valve 42 and the gas engine 25. In the present disclosure, the purge valve 62 may be provided in the outlet line 44-3 which connects the outlet regulator 45 and the engine 25. Thus, the purge valve 62 is arranged downstream of the outlet regulator 45. The purge valve 62 is operable to remove the content of the tanks 40a-c and gas lines. Providing a purge valve 62 in the lower pressure outlet line 44-3 allows the valve to be simpler and minimises the risk of a high pressure leak.

The purge valve 62 may be located within 1.8m of the ground surface, optionally 1.5m, optionally 1.2m, to enable an operator to manually open and close the purge valve from the ground. In some embodiments, the purge valve 62 may be located adjacent an engine housing in which the gas engine 25 is located. In some embodiments, the purge valve 62 is located proximate an entrance to the operator cab 30, and may be connected to the operator cab 30. In some embodiments, the purge valve 62 may be attached to one of the posts 30-2 of the cab 30.

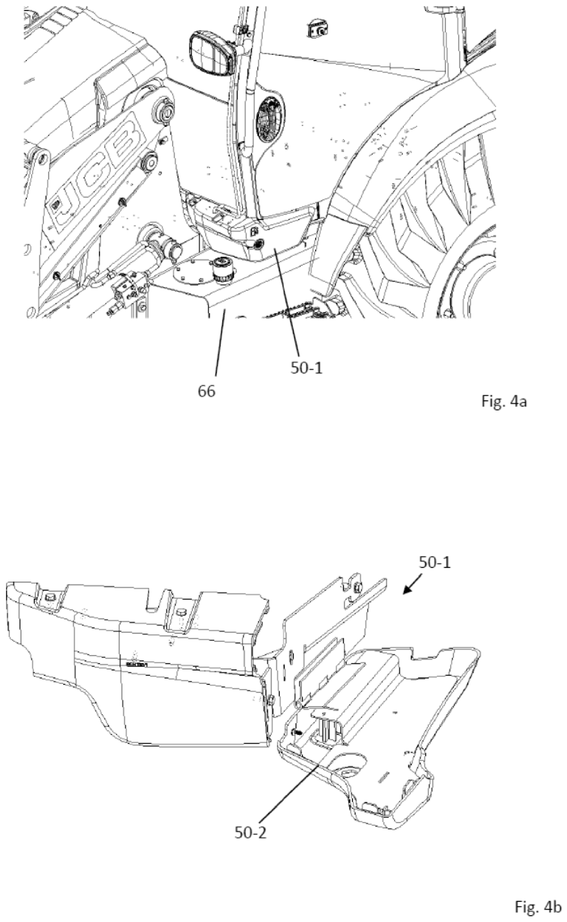

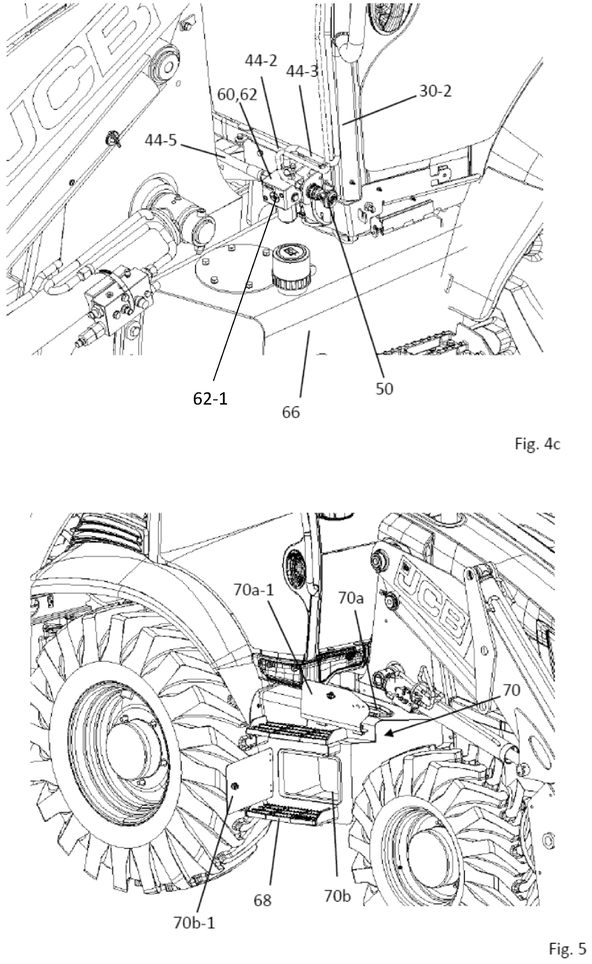

In the example shown in Figure 4c, the purge valve 62 is collocated with filling nozzle inlet 50. Put another way, the purge valve 62 is located adjacent to the filling nozzle 50. Optionally, the purge valve 62 may be included in the same valve block as the shut-off valve 60 for convenience. The purge valve 62 may be located fluidically upstream of the shut-off valve 60 so that the system can be purged if the system is powered down or the valve 62 is inoperable.

The purge valve 62 may comprise a manually removable plug to which a venting tool (not shown) may be attached to capture the purged gas. Once the venting tool is connected the purge valve 62 may be opened and the gas removed. The purge valve 62 may be a service valve which is operable under the control of the venting tool such that it is only operable by trained and authorised personnel. In some embodiments the venting tool may capture the vented gas in a suitable receptacle. Doing so not only conserves the fuel for use elsewhere but also prevents escape to the atmosphere which may be deleterious to the environment. In other embodiments, the venting tool may act as a discharge duct configured and arranged to discharge the gaseous fuel at a predetermined height relative to the purge valve 62.

The purge valve 62 may be manually operable to move the purge valve 62 between open and closed configurations. The purge valve 62 may be manually operable and requiring a tool (not shown), for example an Allen key or any other suitable tool, to move the purge valve 62 between open and closed configurations. The purge valve 62 includes a recess or opening 62-1 configured to receive tool to enable the purge valve 62 to be moved between the open and closed configurations. In other embodiments, the purge valve 62 may comprise a manually operable switch or lever to move the purge valve 62 between open and closed configurations.

As discussed above, the shut-off valve 60 may include a check valve configured to prevent downstream flow of the gaseous fluid. During purging of the gas storage system 38, the provision of the check valve 60 can enable the gas engine 25 to be purged in the event that the shut-off valve 60 fails to open. Once the gaseous fuel has been purged from the part of the gas storage system 38 upstream of the shut-off valve 60, the higher pressure present downstream of the shut-off valve 60 enables upstream flow of the gaseous fluid to the purge valve. In some embodiments, the pressure required to operate the check valve 60 may be approximately 1 bar gauge, 2 bar gauge, or any other suitable predetermined pressure.

Gauge pressure, noted as barg or bar gauge, is commonly used as a monitored pressure as it uses atmospheric pressure as a base value. The at storage tanks will equalise with atmospheric pressure when fully purged or vented and left open to the atmosphere. This means that it is not necessary to subtract the atmospheric pressure to measure the change in pressure. Absolute pressure, noted as bara or bar absolute, is the pressure in a perfect vacuum (i.e. zero pressure). The difference between bar gauge and bar absolute is always equal to the atmospheric pressure.

As noted above, the operator cab 30 and storage system 38 may move relative to the chassis 12 during normal use. In order to provide a connection between the storage system 38 and engine 25, the outlet line 44-3 may include a flexible portion 44-5, which may be referred to as engine line. Providing a flexible portion 44-5 in the outline line 44-3 versus the inlet line 44-2 is preferable due to the lower pressure.

The flexible portion 44-5 of the outline line 44-3 may include one more flexible hoses as known in the art. The flexible hoses may comprise a laminated construction of one or more suitable materials to provide a mechanically suitable hose which is sufficiently resilient to hydrogen embrittlement. The flexible portions and rigid portions of either or both the inlet and outline lines 44-2, 44-3 may be made from one or more of the group comprising: stainless steel, e.g. 316L, nylon, ptfe, polyamide, steel braid etc. In some embodiments, the flexible portions may comprise a laminated polymer hose comprising one or more braids.

The working machine may comprise one or more hydraulic actuators for operating various hydraulic services such as the rams 27 on the working and lifting arms. As such, the working machine may comprise a hydraulic oil tank 66 on a first side of the operator cab 30 in which hydraulic oil can be stored. In the present disclosure, the hydraulic tank 66 is located adjacent the filling nozzle inlet 50 to provide a convenient maintenance location for an operator.

The storage system 38 described herein previously includes a plurality of storage tanks 40a-c located on a roof of the operator cab 30. The location of the storage tanks 40a-c provides potential for a large amount of storage thereby extending the duration of use between refuelling. In some embodiments of the present disclosure, the storage tanks 40a-c may be distributed about the working machine in alternative locations. For example, the one or more storage tanks 40' may be located remote from the operator cab 30, for example, on the side of the chassis 12 or on an underside of the chassis 12.

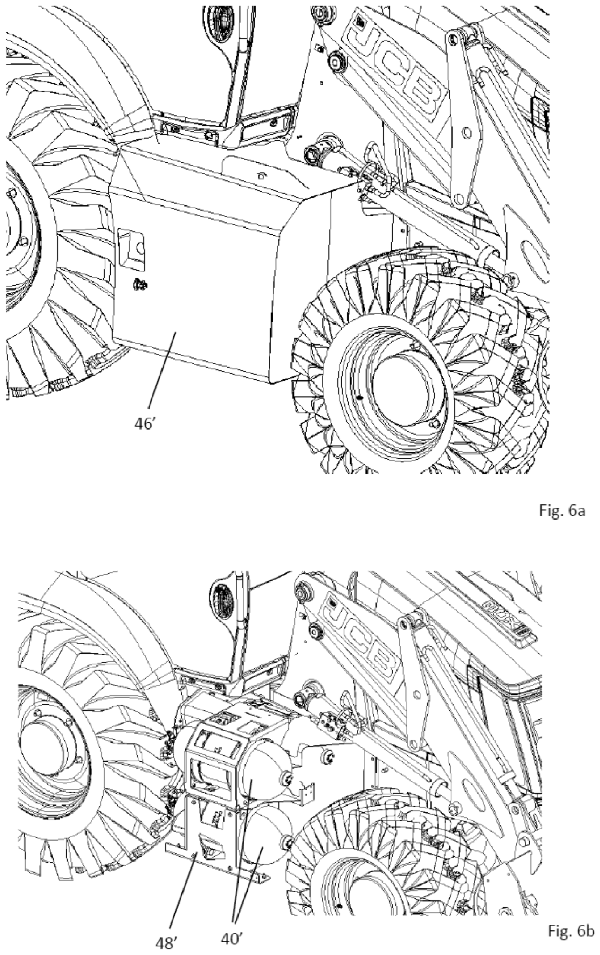

Figures 6a and 6b provide an example of a plurality of storage tanks 40' being located on the side of the working machine 10 longitudinally between the front and rear wheels 14 and below the operator cab 30. The storage tanks 40' are provided within a housing 46' and supported by a structural mounting frame 48' which is attached to the chassis 12. In the embodiment shown there are provided four cylindrical tanks however there may be greater or fewer tanks in alternative embodiments.

In a conventional machine comprising a diesel engine, a fuel tank may be provided on a side of the machine 10 in the location where the storage tanks 40' are provided. Thus, the presence of the storage tanks 40' in this location may be represent the swapping of one storage system for another. However, providing the tanks 40' in this location may interfere with cab access steps 68 (shown in Figure 5) and may not be of sufficient volume to accommodate enough gaseous fuel. Hence, in some embodiments, the tanks 40' may supplement a primary storage system 38 provided on the roof of the cab 30 (as described herein) rather than being the sole storage location.

Although shown on the right hand side of the machine 10, the present disclosure contemplates providing tanks 40' on either side of the machine centreline. Hence, there be tanks provided on either or both of the left and right hand sides of the machine 10.

The side storage tanks 40' may each comprise a volume which is smaller than the roof tanks and have normal operating pressures similar to those disclosed above for tanks 40a-c. The weight of the hydrogen stored in the side tanks 40' may be between 2kg and 7kg when fully loaded.

In embodiments where the side storage tanks 40' are not implemented, the space may be usefully replaced with one or more tool storage compartments 70. Hence, as can be seen in Figure 5, there is provided an upper and lower tool storage compartment 70a,b, each having a hinged access door 70a-1, 70b-1. The took storage compartments 70 may be provided behind cab access steps 68 with the doors 70a-1, 70b-1 provided in suitable locations between the steps 68 or above.

The tool storage compartments 70 may comprise an external housing which defines an enclosed space in which one or more items may be stored. The housing may comprise a at least one outboard facing lateral wall in which a hinged access door 70b-1 (or other form of removable panel) may be provided. The housing 70 may further comprise at least one upwardly facing wall. The upwardly facing wall may comprise a hinged access door 70a-1 (or other removable panel) to provide access from above. The tool storage compartment 70 may be a single compartment having a side access and top access, or compartments 70a, 70b may be segregated with separate access doors, as shown.

The upper access door 70a-1 is generally L-shaped when viewed side on and hinged on the outboard wall. However, the door 70a-1 may be hinged to the rear of the opening in some embodiments and/or on the upper surface.

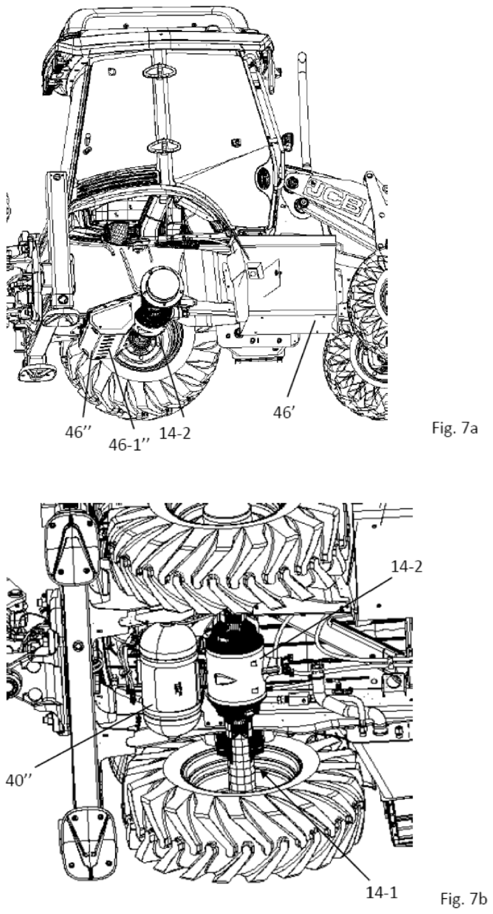

Figures 7a and 7b show a yet further alternative storage system with a tank 40" located beneath the chassis 12. Storage tank 40" is located towards the rear of the machine between the rear wheels 14. Storage tank 40" may comprise an elongate cylindrical body which is transversely orientated. The tank 40"may be provided to the rear of the rear axle 14-1 behind the rear differential 14-2 and in front of the working arm 20 and/or rear stabilizer legs 15. The tank 40" may comprise mechanical protection in the form of housing 46" which envelopes at least an underside of the tank to prevent foreign object strikes from below. The housing 46" may comprise one or more drainage holes 46" and may be generally perforated.

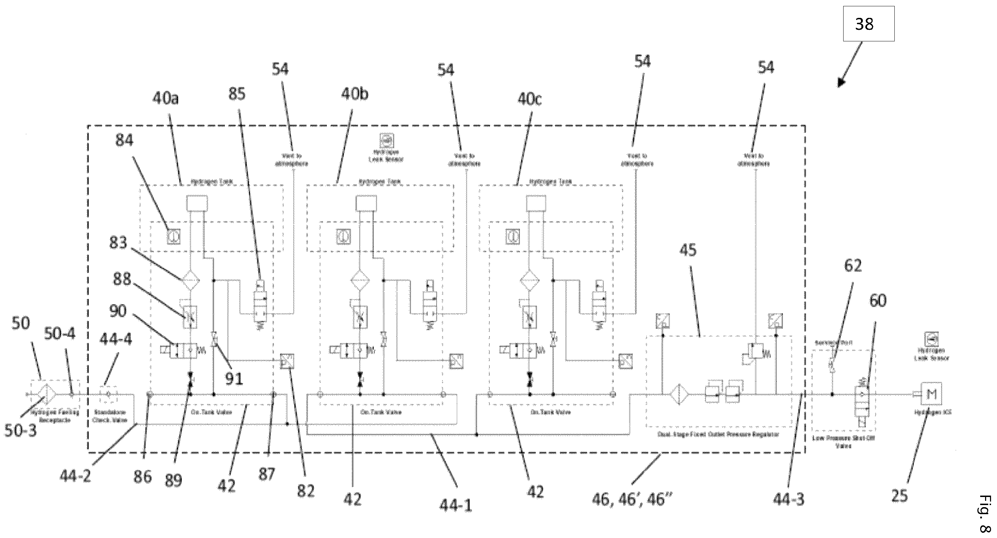

Figure 8 shows a schematic diagram of the gas storage system 38 of the present disclosure. The gas storage system 38 may be implemented in any working machine having a gas engine but may be particularly applicable to the backhoe loader 10 disclosed herein. The same reference numerals as used previously may be used for corresponding features. In such cases, the description of these features may not be repeated.

The gas storage system 38 comprises a plurality of storage tanks 40a-c each having a tank valve 42. The tank valves 42 include ports to which gas lines 44 are connected to provide series flow communication between the valves 42. Thus, there can be seen connecting lines 44-1 extending between the first and second tanks 40a,b and second and third tanks 40b,c. An inlet line 44-2 is T'ed into the connecting line 44-1 which extends between the first and second tanks 40a,b. An outlet line 44-3 extends between the final tank 40c and the outlet regulator 45. The tanks 40a-c, tank valves 42 and outlet regulator 45 are provided within the housing 46 which is provided on the operator cab 30 or elsewhere on the machine. As noted above, in some embodiments of the present disclosure there may be more or fewer tanks 40a-c, for example, where the tanks 40a-c are provided on the side of the machine 10 or underneath.

Upstream of the storage tanks 40a-c and housing 46, there is provided a filling nozzle inlet 50 connected by the inlet line 44-2. The filling nozzle inlet 50 comprises a filter 50-3 to help remove particulate matter from the flow of gaseous fuel as it enters. The inlet 50 may also comprise a check valve 50-4 which prevents a reverse flow of gas from the tanks 40a-c when the filling nozzle (not shown) is removed. In some embodiments, the check valve may be selectively openable to allow gas to be purged from the system 38 and captured in a reverse refuelling process. Removing fuel may be done for transport or storage purposes where the tanks 40a-c are emptied of gaseous fuel and optionally filled with an inert gas such as nitrogen. In some embodiments, the check valve 50-4 may be arranged downstream of the filter 50-3.

A check valve 44-4 may be provided local to the tanks 40a-c, for example in the housing 46. The check valve 44-4 may be arranged upstream of the tank valve 42. Check valve 44-4 may be provided as part of the T-piece which connects the connecting line 44-1 and the inlet line 44-2 or where the inlet line 44-2 enters a tank valve 42 which may be the preferred connection in some embodiments. In Figure 8, the check valve 44-4 is shown as being separate from the T-piece, tank valves 42 and connecting line 44-1, but within the housing 46. The purpose of check valve 44-4 is to prevent a mass evacuation of gas in the event of an exposed portion of inlet line 44-2 being severed or otherwise damaged in use.

Each tank valve 42 may comprise one or more of: a tank shut-off valve, a pressure sensor 82, filter 83, a temperature sensor 84, a thermally-activated pressure relief device, TPRD 85; a first port 86; a second port 87; excess flow valve 88; and, one or more tank valves 89, 91, for allowing flow into and out of the tanks. As can be seen, the ports may be interconnected by a flow passage.

The tank valves 42 are connected to the internal volume of the tanks 40a-c via two path ways. The first path way includes a manual normally open valve 89, a solenoid operated check valve 90, a excess flow valve 88, and a filter 83. The solenoid operated check valve is configured to allow flow into the respective tank 40a-c when gaseous fuel is provided by the inlet line 44-2 from the filling nozzle inlet 50 whilst preventing reverse flow. Activation of the solenoid may be achieved by the controller 64 and removes the check valve from the flow path to allow reverse flow for the purpose of emptying the tanks 40a-c.

The second path comprises a normally closed manually operated valve 91. This valve 91 may be operated by hand to empty the tanks manually should the machine be powered off or the solenoid valve become inoperable.

The TPRD connects the internal volume of the respective tank 40a-c to air via a suitable vent line outlet 54, via vent lines 52.

Each tank 40a-c has an associated tank sensor assembly configured to monitor at least one tank parameter associated with the at least one storage tank. The tank sensor assembly may include the temperature sensor 84 to monitor the gas temperature of gaseous fuel within the tank 42. The tank sensor assembly may include the pressure sensor 82 to monitor the pressure inside the tanks 40a-c

The controller 64 may be configured to activate a purge mode in which it is safe to purge, remove, eject, or discharge the gaseous fuel from the gas storage system 38 via the purge valve 62.

When the engine is in an active state (i.e. when the engine is running), one or more storage tanks 40a-c may be opened at once to supply gaseous fuel to the gas engine 25. If a fault is detected in one or more storage tanks 40a-c, the controller 64 may keep the respective tank valve closed. The purge mode acts as a safety override to enable all of the tanks 40a-c to be opened when the engine is in an inactive state (i.e. when the engine 25 is not running or off). The purge mode may also enable any tanks 40a-c that are being kept closed, e.g. due a fault, to be opened to enable them to be purged. The gas storage system may be configured to prevent the purge mode being activated when the engine is in an active state.

It will be understood that the controller 64 will activate the purge mode in response to a command from an operator, and that said commends may be input via an electronic device that is connected to the controller, for example via a wired connection or a wireless connection. It will be understood that while activating the purge mode provides a safe mode for purging of the gas storage system to occur, purging of the gaseous fuel will only occur once the purge valve 62 is in the open configuration.

In order to try and reduce the risk of an accidental purging of the gas storage system 38, activation of the purge mode may require dual activation. In such embodiments, in addition to the command received by the controller 64, a manually operable control (not shown) may need to be actuated in order for the purge mode to be activated. The manually operable control may be a switch, a button, a lever, or any other suitable control. In this way, the controller 64 is prevented from activating the purge mode until the manually operable control has been actuated.

When the purge mode is activated, the controller 64 is configured to open the tank valve 42 for each of the plurality of storage tanks 40-a-c to enable the gas within the tank 40a-c to be purged from the gas storage system. It will be appreciated that the controller 64 may be configured to sequentially open the tank valve 42 of each storage tank 40a-c or to open one or more tank valve 42 simultaneously when the purge mode is activated.

During purging of the gas storage system 38, and/or when in the purge mode, the controller 64 may be configured to monitor a pressure of each storage tank 40a-c via the pressure sensor 82. When the pressure within each storage tank is approximately 1 bar gauge, the controller 64 closes the tank valve 42. In order to prevent the inflow or air into the gas storage tank 40a-c during or after purging of said tank 40a-c, the controller 64 may ensure that the pressure in each storage tank 40a-c does not go below a pressure of 1 bar gauge. When the pressure within each tank 40a-c has reached approximately 1 bar gauge and the respective tank valves 42 have been closed, the controller 64 may be configured to deactivate the purge mode. In some embodiments, the controller 64 may not open a tank valve is the associated storage tank has a pressure of approximately 1 bar gauge or less.

In some embodiments, the controller 64 may be configured to open the shut-off valve 60 when the purge mode is activated. Opening of the shut-off valve 60 enables the lines and gas engine 25 to be purged of the gaseous fuel contained therein. It will be understood that the controller may be configured to open the shut-off valve 60 after the gas storage system 38 upstream of the shut-off valve 60 has been purged, or at the same time.

In addition to purging the gas storage system of gaseous fuel within the system, it will be appreciated that the controller and gas storage system may also be used in the commissioning of a gas storage system and/or in the refuelling of the gas storage system, for example after maintenance.

When the gas storage system is to be first commissioned, or when the system is to be filled with a gaseous fuel following maintenance, the storage tanks 40a-c may initially have air within them, at least partially.

One or more of the tank valves 42 will be opened by the controller to enable each storage tank 40a-c to be filled with an inert gas, for example nitrogen or carbon dioxide, introduced into the gas storage system via the filling nozzle inlet 50.

During filling of the storage tank 40a-c with the inert gas, the controller 64 monitors the pressure in said storage tanks 40a-c and fills the tanks to a pre-determined pressure before closing the respective tank valve 42. It will be appreciated that storage tanks may be filled with the inert gas to any pressure above 1 bar gauge, for example above 2 bar gauge, above 10 bar gauge, above 20 bar gauge. Optionally, the storage tanks 40a-c may be filled with the inert gas up to a pressure of approximately 50 bar gauge.

The controller 64 will then activate a purge mode, as has been described above, to open the tank valve 42 and the purge valve 62. The inert gas is then purged from the gas storage system 38 until the pressure in the tanks is approximately 1 bar gauge. As discussed above, the controller 64 may be configured to ensure that the pressure within each storage tank 40a-c does not go below 1 bar gauge.

Following purging of the inert gas from the gas storage system, the storage tanks 40a-c may then be filled with a gaseous fuel via the filling nozzle inlet 50, as has been described above. It will be appreciated that storage tanks may be filled with the gaseous fuel to any pressure above 1 bar gauge, for example above 2 bar gauge, above 10 bar gauge, above 20 bar gauge. Optionally, the storage tanks 40a-c may be filled with the gaseous fuel up to a pressure of approximately 50 bar gauge.

The controller 64 will then activate a purge mode, as has been described above, to open the tank valve 42 and the purge valve 62. The gaseous fuel is then purged from the gas storage system 38 until the pressure in the tanks is approximately 1 bar gauge. As discussed above, the controller 64 may be configured to ensure that the pressure within each storage tank 40a-c does not go below 1 bar gauge.

Following this second purge of the gas storage system 38, the gas storage system 38, i.e. the gas storage tanks 40a-c, may then be refuelled with the gaseous fuel to a desired fill level, for example to fill each of the gas storage tanks 40a-c to maximum capacity.

Although the gas storage system has been described above in relation to a working machine in the form of a backhoe loader, it will be understood that the gas storage system and associated controller may be applied to any system including such a gas storage system.

Construction sites, especially during the foundation preparation stage, are generally without access to mains electricity (i.e. are "off-grid" locations). As a result, power systems such as generator sets (often referred to as "gensets"), are utilised on construction sites to provide power to one or more devices/equipment on the construction site, for example a tower crane, flood lights, site cabin power sockets etc. Gensets are also used in other analogous situations for oil and gas exploration, mining, disaster recovery and the like. In some embodiments, the gas storage system may be used in a gas powered generator set (or genset). Such a generator set may include a gas engine 25 and a gas storage system 38 as illustrated in Figure 8, a controller 64 configured to control the gas storage system as has been described with reference to Figures 1 to 8, and an electrical generator for supplying electrical energy to a battery pack and/or to an electrical energy outlet.

In further embodiments, the gas storage system may be used in a portable refuelling device for providing fuel at the point of use such that off-highway/working machines can easily refuel with minimum disruption to their working schedule. Such a portable refuelling device may include a gas storage system 38 as illustrated in Figure 8, a controller 64 configured to control the gas storage system as has been described with reference to Figures 1 to 8, and a refuelling outlet nozzle configured to discharge a gaseous from the gas storage system for refuelling a vehicle, such as an off-highway/working machine.

The one or more embodiments are described above by way of example only and it will be appreciated that there may be variations to those described above. The variations are possible without departing from the scope of protection afforded by the appended claims.

## Claims

1. A working machine comprising:
a ground engaging structure for providing propulsion over a ground surface;
a chassis mounted to the ground engaging structure;
an operator cab mounted to the chassis;
a gas engine for providing propulsive power to the ground engaging structure;
at least one storage tank for storing gaseous fuel for the gas engine; and
a purge valve for removing gaseous fuel from the at least one storage tank.

2. The working machine of claim 1, further comprising an outlet regulator located in between the at least one storage tank and gas engine, the outlet regulator configured to reduce the pressure of the gaseous fuel stored in the storage tank, wherein the purge valve is located downstream of the outlet regulator.

3. The working machine of claim 1 or 2, wherein the purge valve is located within 1.8m of the ground surface, optionally within 1.5m of the ground surface, optionally within 1.2m of the ground surface.

4. The working machine of any preceding claim, comprising a shut off valve for fluidically isolating the at least one storage tank from the gas engine, optionally wherein the shut off valve is solenoid operated.

5. The working machine of claim 4, wherein the purge valve and shut off valve are provided within a common valve block.

6. The working machine of any preceding claim, wherein the purge valve is located proximate an entrance to the operator cab.

7. The working machine of any preceding claim, wherein the purge valve is connected to the operator cab.

8. The working machine of claim 7, wherein the operator cab comprises a plurality of vertically extending posts configured to support the operator cab roof, wherein the purge valve is attached to one of the posts.

9. The working machine of any preceding claim, wherein the purge valve is located adjacent an engine housing in which the gas engine is located.

10. The working machine of any of claims 3 to 9, comprising an outlet line connecting the purge valve to the outlet regulator and an engine line connecting the purge valve to the gas engine, wherein the outlet line comprises a rigid pipe and the engine line comprises a flexible pipe.

11. The working machine of any preceding claim, comprising a filling nozzle inlet for receiving a supply of gaseous fuel for the at least one storage tank, wherein the filling nozzle inlet is located adjacent the purge valve.

12. The working machine of claim 11 when dependent on claims 8 and 10, wherein the filling nozzle inlet is connected to the at least one storage tank via an inlet line and the inlet line and outlet line run parallel to one another along the vertically extending post.

13. The working machine of either of claims 11 or 12, wherein the filling nozzle inlet comprises check valve and a filter for filtering the gaseous fuel received from a filling nozzle, wherein the check valve is downstream of the filter.

14. The working machine of claims 11 to 13, wherein the inlet line comprises a tank check valve local to the at least one tank, optionally wherein the tank valve is housed within a storage tank housing.
